# EUROPÄISCHE PATENTSCHRIFT

(11) **EP 1 593 577 B1**
(45) Veröffentlichungstag und Bekanntmachung des Hinweises auf die Patenterteilung: **29.12.2010**
(21) Anmeldenummer: 05005100.2
(22) Anmeldetag: 09.03.2005
(51) Int. Cl.: B62D 1/04

(54) **Abdeckungen für ein Lenkrad**
Covers for a steering wheel
Couvercles pour un volant

(30) Priorität: 07.05.2004 DE 102004022634
(43) Veröffentlichungstag der Anmeldung: 09.11.2005
(73) Patentinhaber: Dr. Ing. h.c. F. Porsche AG, 70435 Stuttgart (DE)
(72) Erfinder: Wahl, Georg, 75181 Pforzheim (DE); Rosman, Bojan, 70569 Stuttgart (DE)

(56) Entgegenhaltungen:
- US-A1- 2004 083 849
- US-A1- 2004 084 291

## Beschreibung

Die Erfindung bezieht sich auf Abdeckungen für ein Lenkrad eines Kraftfahrzeugs nach dem Oberbegriff des Patentanspruchs 1.

Aus der US 2003/0101840 A1 geht ein in ein Kraftfahrzeug eingebautes Lenkrad hervor, das einen Lenkradring, zwei horizontale Speichen und eine aufrechte Speiche aufweist; letztere erstreckt sich unterhalb einer horizontalen Lenkradebene. In die horizontalen Speichen sind Schalter zum Zurückschalten von Getriebegängen eines Multifunktionsgetriebes mit automatischem Modus und manuellem Modus eingesetzt.

Ein ähnliches Kraftfahrzeug-Lenkrad wird in der EP 1 190 918 A2 behandelt, wobei in den horizontalen Speichen benachbart einem Lenkradring einem Fahrer zugekehrte Abdeckungen zur Aufnahme von Schaltern zur Betätigung von Einrichtungen des Kraftfahrzeugs vorgesehen sind.

US 2004 084 291 A1 beschreibt Gattungsgemäße Abdeckungen nach dem Oberbegriff des Anspruchs 1.

Aufgabe der Erfindung ist es Abdeckungen zum Einbau in Speichen eines Lenkrads eines Kraftfahrzeugs in der Weise auszugestalten, dass Lenkräder mit gleichem Grundaufbau für verschiedene Fahrzeugmodelle mit unterschiedlichen Einrichtungen verwendbar sind.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die als Module ausgeführten Abdeckungen je nach Ausstattung des Kraftfahrzeugs mit schalterlosen Bereichen und/oder mit Schaltern versehene Funktionsbereiche umfasst, wodurch unterschiedliche Abdeckungen für definierte Ausstattungen bzw. Einrichtungen des Kraftfahrzeugs in Verbindung mit Lenkrädern gleicher baulicher Grundkonstruktion an besagten Lenkrädern verbaubar sind. Dabei sind vielfältige Kombinationen von schalterlosen Bereichen und Schalter umfassenden Funktionsbereichen an den Abdeckungen umsetzbar. Die Abdeckungen bieten eine Reihe von Lösungen für eine bediengünstige und weitgehend oberflächenbündige Unterbringung von Schaltern an. Gerade ein Getriebeschalter zur Ansteuerung manueller Getriebegänge eines Getriebes lässt sich auf übersichtliche Weise in die jeweilige Abdeckung sinnfällig integrieren.

In der Zeichnung wird ein Ausführungsbeispiel der Erfindung gezeigt, das nachstehend näher erläutert wird.

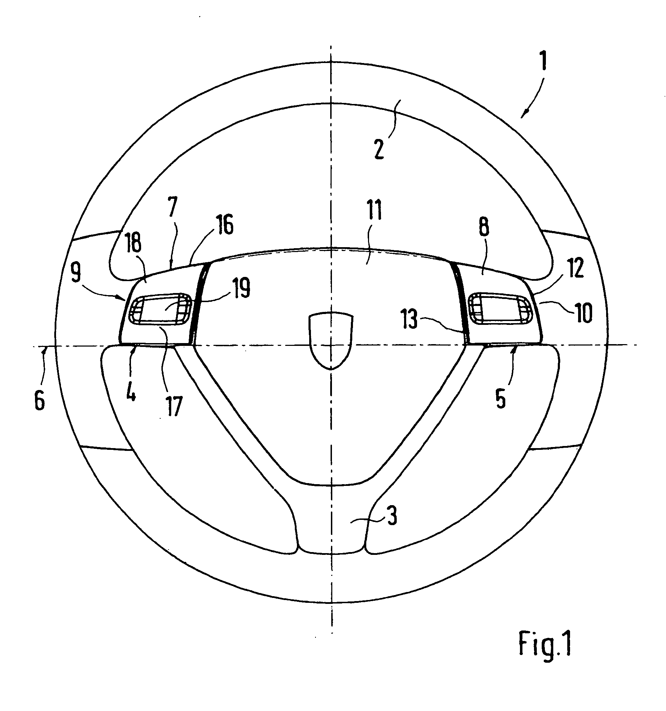

Es zeigen
- Fig. 1: eine Ansicht von oben auf ein Lenkrad für ein Kraftfahrzeug mit einer Abdeckung nach der Erfindung,
- Fig. 2: eine Teilansicht der Fig. 1 mit einer ersten erfindungsgemäßen Ausführung einer Abdeckung in größerem Maßstab,
- Fig. 3: eine Ansicht entsprechend Fig. 2 mit einer zweiten erfindungsgemäßen Ausführung einer Abdeckung,
- Fig. 4: eine Ansicht entsprechend Fig. 3 mit einer dritten erfindungsgemäßen Ausführung einer Abdeckung,
- Fig. 5: eine Schrägansicht einer als Modul ausgeführten Abdeckung nach der Erfindung.

Ein Lenkrad 1 für ein nicht näher dargestelltes Kraftfahrzeug umfasst ein Lenkradring 2, der mit einer aufrechten Speiche 3 und zwei horizontalen Speichen 4 und 5 versehen ist. Die Speichen 4 und 5 schließen eine horizontale Lenkradebene 6 ein, und die Speiche 3 verläuft unterhalb der Lenkradebene 6. In die horizontalen Speichen 4 und 5 sind benachbart dem Lenkradring 2 Abdeckungen erste und zweite Abdeckungen 7 und 8 eingesetzt, welche spiegelbildlich ausgebildeten Abdeckungen 7 und 8 einerseits von Erweiterungen 9 und 10 des Lenkradrings 2 weggeführt und andererseits an eine zentrale Verkleidungsplatte 11 des Lenkrads 1 anschließen. Zwischen den ersten Abdeckungen 7 und 8 und den Erweiterungen 9 und 10 bzw. der Verkleidungsplatte 11 sind sichtbare Fugen 12 und 13 vorgesehen, die in aufrechter Richtung gesehen einen bogenförmigern Verlauf aufweisen.

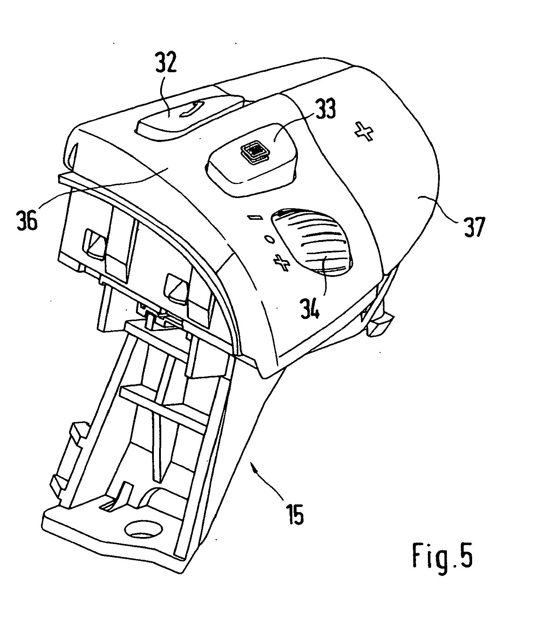

Jede erste Abdeckung, z.B. 7 oder 8 ist als Modul 14 mit einer Befestigungskonsole 15 - Fig. 5 - ausgeführt, die eine Abdeckplatte 16 trägt. Die Abdeckplatte 16 der ersten Abdeckung 7 ist mit einem schalterlosen Bereich 17 versehen, wobei in eine Oberfläche 18 der Abdeckplatte 16 eine Flächen aufteilenden Prägung 19 mit etwa rechteckiger Grundform integriert ist.

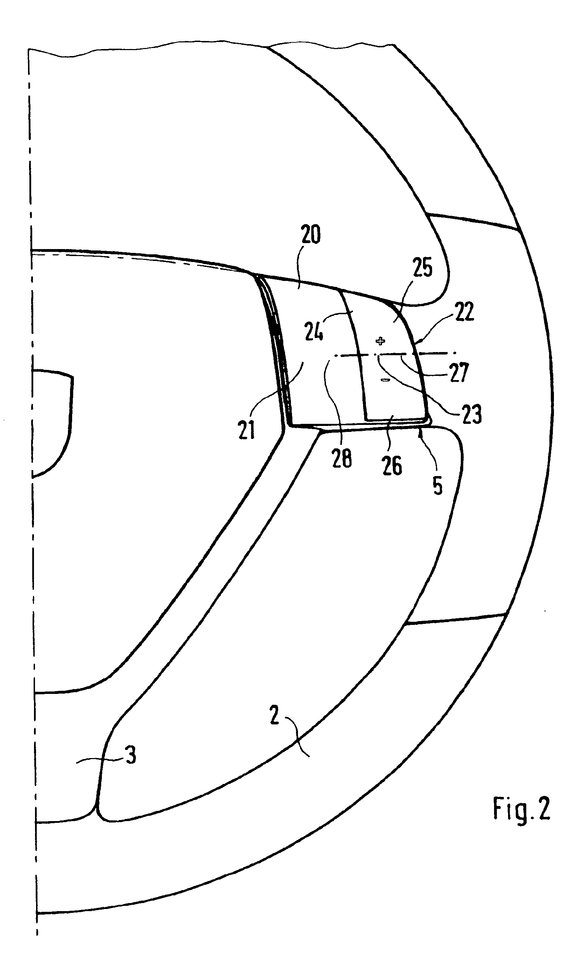

Gemäß Fig. 2 ist eine zweite Abdeckung 20 mit einem schalterlosen Bereich 21 und mit einem einen Schalter 22 aufweisenden Funktionsbereich 23 versehen. Der Schalter 22 ist als Getriebeschalter 24 ausgebildet, mit dem manuelle Getriebegänge eines Getriebes des Kraftfahrzeugs ansteuerbar sind. Der Getriebeschalter 24 ist als ein Kippschalter ausgeführt, wobei eine eine Oberfläche 25 umfassende Betätigungsplatte 26 des Getriebeschalters 24 um eine horizontale Achse 27 schwenkbar ist. In die Oberfläche 25 der Betätigungsplatte 26 sind Schaltsymbole + (plus) und - (minus) zum Hochschalten und Zurückschalten der Getriebegänge des Getriebes eingearbeitet. Darüber hinaus ist die Oberfläche 25 des Getriebeschalters 24 von einer Oberfläche 28 des schalterlosen Bereichs 21 getrennt.

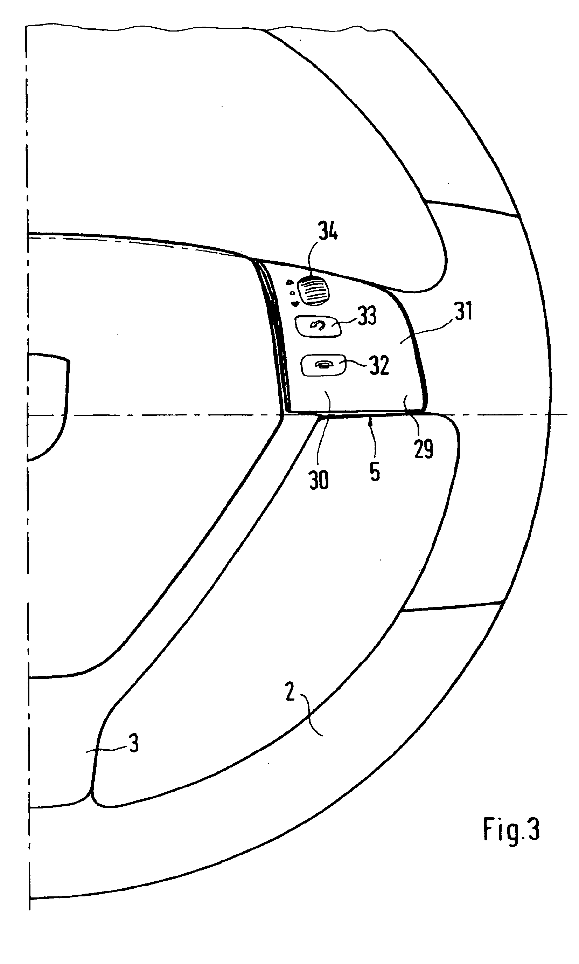

In Fig. 3 wird gezeigt, dass eine dritte Abdeckung 29 einen Multifunktionsschalterbereich 30 und einen schalterlosen Bereich 31 umfasst. Der Multifunktionsschalterbereich 30 ist mit mehreren Schaltern 32, 33 und 34 versehen, die in aufrechter Richtung gesehen übereinander liegend zueinander angeordnet sind. Die Schalter 32 und 33 sind als Druckschalter ausgebildet, wogegen der Schalter 34 ein Drehschalter ist.

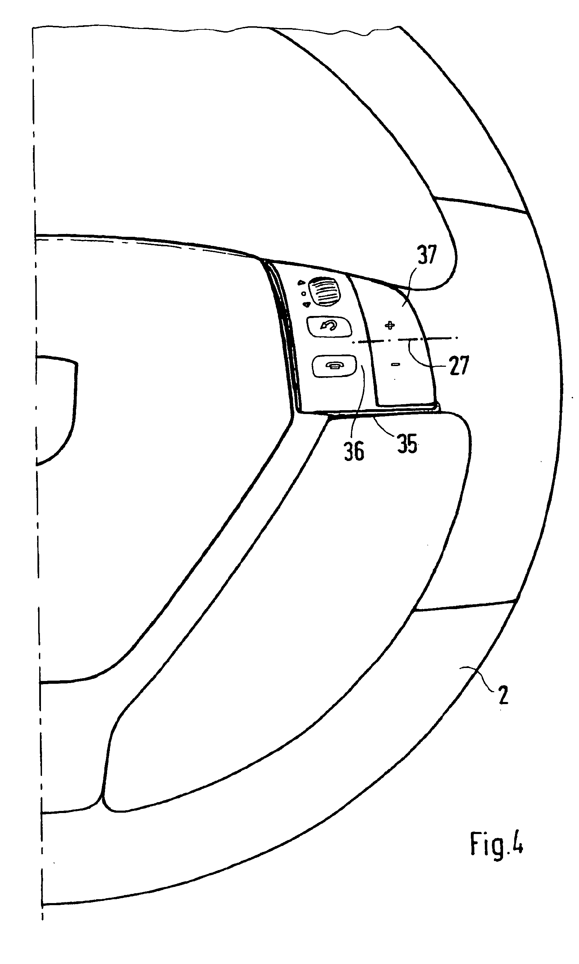

Fig. 4 gibt eine vierte Abdeckung 35 mit einem Multifunktionsschalterbereich 36 und einen Getriebeschalter 37 wieder. Der Getriebeschalter 37 ist wie der Getriebeschalter 24 der zweiten Abdeckung 20 ausgebildet; der Multifunktionsbereich 36 wie der Multifunktionsbereich 30 der dritten Abdeckung 29.

Schließlich sind die Schalter 32, 33 und 34 des Multifunktionsschalterbereiches 30 und der Getriebeschalter 24 in der Weise angeordnet und gestaltet, dass sie vom Fahrer des Kraftfahrzeugs mit seinen Daumen betätigbar sind. Hierzu können an den Speichen 4 und 5 des Lenkrads 1 spiegelbildlich jeweils ein Multifunktionsschalterbereich 36 und ein Getriebeschalter 37 vorgesehen sein.

## Patentansprüche

1. Abdeckungen für ein Lenkrad eines Kraftfahrzeugs mit wenigstens zwei etwa horizontal ausgerichteten und mit einem Lenkradring verbundenen Speichen, in die benachbart dem Lenkradring Abdeckungen eingesetzt sind, wobei die Abdeckungen zur Aufnahme von Schaltern ausgebildet sind und einerseits von Erweiterungen des Lenkradrings und anderseits von einem Mittelteil des Lenkrads begrenzt werden, **dadurch gekennzeichnet, dass** die Abdeckungen (7, 8; 20; 29; 35) als Module (14) ausgeführt sind, wobei je nach Ausstattung des Kraftfahrzeugs verbaut sind:
- erste Abdeckungen (7, 8), die nur mit schalterlosen Bereichen (17) versehen sind,
- zweite Abdeckungen (20), die mit schalterlosen Bereichen (21) und mit Schaltern (22) versehenen Funktionsbereichen (23) ausgestaltet sind,
- dritte Abdeckungen (29), die Multifunktionsschalterbereiche (30) und schalterlose Bereiche (31) aufweisen, und
- vierte Abdeckungen (35), die Multifunktionsschalterbereiche (36) und einen Getriebeschalter (37) zur Ansteuerung manueller Getriebegänge eines Getriebes des Kraftfahrzeugs besitzen.

2. Abdeckungen nach Anspruch 1, **dadurch gekennzeichnet, dass** in Oberflächen (18) von Abdeckplatten (16) der ersten Abdeckungen (7 und 8) Flächen aufteilende Prägungen (19) eingearbeitet sind.

3. Abdeckungen nach Anspruch 1, **dadurch gekennzeichnet, dass** jede zweite Abdeckung (20) einen Getriebeschalter (24) zur Ansteuerung bspw. manueller Getriebegänge eines Getriebes des Kraftfahrzeugs umfasst.

4. Abdeckungen nach Anspruch 3, **dadurch gekennzeichnet, dass** der Getriebeschalter (24) als Kippschalter ausgebildet und um eine horizontale Achse (27) schwenkbar ist.

5. Abdeckungen nach Anspruch 4, **dadurch gekennzeichnet, dass** eine Oberfläche (25) des Getriebeschalters (24) Schaltsymbole + Plus und - Minus zum Hochschalten und Zurückschalten der Getriebegänge des Getriebes aufweist.

6. Abdeckungen nach den Ansprüchen 1, 3 und 5, **dadurch gekennzeichnet, dass** die Oberfläche (25) des Getriebeschalters (24) von einer Oberfläche (28) des benachbarten schalterlosen Bereichs (21) getrennt ist.

7. Abdeckungen nach Anspruch 1, **dadurch gekennzeichnet, dass** jeder Multifunktionsschalterbereich (30) mehrere übereinander liegende Schalter (32, 33 und 34) umfasst.

8. Abdeckungen nach einem oder mehreren der vorangehenden Ansprüche, **dadurch gekennzeichnet, dass** die Schalter (32, 33 und 34) der Multifunktionsschalterbereiche (30) und die Getriebeschalter (24) vorzugsweise vom Fahrer des Kraftfahrzeugs mittels seiner Daumen betätigbar sind.

## Claims

1. Covers for a steering wheel of a motor vehicle having at least two approximately horizontally aligned spokes connected to a steering wheel ring, into which spokes covers are inserted adjacent to the steering wheel ring, with the covers being designed to hold switches and being delimited at one side by extensions of the steering wheel ring and at the other side by a central part of the steering wheel, **characterized in that** the covers (7, 8; 20; 29; 35) are designed as modules (14), wherein depending on the equipment of the motor vehicle, the following are installed:
- first covers (7, 8) which are provided only with switch-free regions (17),
- second covers (20) which are formed with switch-free regions (21) and functional regions (23) provided with switches (22),
- third covers (29) which have multifunction switch regions (30) and switch-free regions (31), and
- fourth covers (35) which have multifunction switch regions (36) and a transmission switch (37) for actuating manual transmission gears of a transmission of the motor vehicle.

2. Covers according to Claim 1, **characterized in that** area-partitioning embossings (19) are formed in surfaces (18) of cover plates (16) of the first covers (7 and 8).

3. Covers according to Claim 1, **characterized in that** every second cover (20) comprises a transmission switch (24) for actuating for example manual transmission gears of a transmission of the motor vehicle.

4. Covers according to Claim 3, **characterized in that** the transmission switch (24) is designed as a rocker switch and is pivotable about a horizontal axis (27).

5. Covers according to Claim 4, **characterized in that** a surface (25) of the transmission switch (24) has shift symbols + plus and - minus for upshifting and downshifting the transmission gears of the transmission.

6. Covers according to Claims 1, 3 and 5, **characterized in that** the surface (25) of the transmission switch (24) is separate from a surface (28) of the adjacent switch-free region (21).

7. Covers according to Claim 1, **characterized in that** each multifunction switch region (30) comprises a plurality of switches (32, 33 and 34) arranged one above the other.

8. Covers according to one or more of the preceding claims, **characterized in that** the switches (32, 33 and 34) of the multifunction switch regions (30) and the transmission switches (24) can preferably be actuated by the driver of the motor vehicle using his thumb.

## Revendications

1. Couvercles pour un volant d'un véhicule automobile avec au moins deux rayons orientés approximativement horizontalement et reliés à une couronne de volant dans lesquels les couvercles connexes à la couronne de volant sont encastrés, les couvercles étant réalisés de façon à loger des commutateurs et étant délimités d'une part par les élargissements de la couronne de volant et d'autre part par une partie centrale du volant, **caractérisés en ce que** les couvercles (7, 8 ; 20 ; 29 ; 35) prennent la forme de modules (14), sachant que l'on prévoit respectivement les éléments suivants en fonction de l'équipement du véhicule automobile :
- des premiers couvercles (7, 8) uniquement pourvus de zones sans commutateur (17) ;
- des deuxièmes couvercles (20) pourvus de zones sans commutateur (21) et de zones fonctionnelles (23) dotées de commutateurs (22) ;
- des troisièmes couvercles (29) comportant des zones de commutateur multifonctions (30) et des zones sans commutateur (31) ; et
- des quatrièmes couvercles (35) possédant des zones de commutateur multifonctions (36) et un commutateur de boîte de vitesses (37) pour commander les rapports manuels de boîte de vitesses d'une boîte de vitesses du véhicule automobile.

2. Couvercles selon la revendication 1, **caractérisés en ce que** des marques (19) séparant les plans sont réalisées dans les surfaces (18) des plaques de recouvrement (16) des premiers couvercles (7 et 8).

3. Couvercles selon la revendication 1, **caractérisés en ce que** chaque deuxième couvercle (20) comprend un commutateur de boîte de vitesses (24) pour commander par exemple les rapports manuels de boîte de vitesses d'une boîte de vitesses du véhicule automobile.

4. Couvercles selon la revendication 3, **caractérisés en ce que** le commutateur de boîte de vitesses (24) prend la forme d'un commutateur à bascule et peut pivoter autour d'un axe horizontal (27).

5. Couvercles selon la revendication 4, **caractérisés en ce qu'**une surface (25) du commutateur de boîte de vitesses (24) comporte des symboles de changement de vitesse + plus et - moins pour passer à la vitesse supérieure et inférieure des rapports de boîte de vitesses de la boîte de vitesses.

6. Couvercles selon les revendications 1, 3 et 5, **caractérisés en ce que** la surface (25) du commutateur de boîte de vitesses (24) est séparée d'une surface (28) de la zone sans commutateur (21) connexe.

7. Couvercles selon la revendication 1, **caractérisés en ce que** chaque zone de commutateur multifonction (30) comprend plusieurs commutateurs (32, 33 et 34) superposés.

8. Couvercles selon l'une quelconque des revendications précédentes ou plusieurs d'entre elles, **caractérisés en ce que** les commutateurs (32, 33 et 34) des zones de commutateur multifonctions (30) et les commutateurs de boîte de vitesses (24) peuvent être actionnés de préférence par le conducteur du véhicule automobile à l'aide de ses pouces.
